# EUROPÄISCHE PATENTSCHRIFT

(11) **EP 0 788 869 B1**
(45) Veröffentlichungstag und Bekanntmachung des Hinweises auf die Patenterteilung: **29.08.2001**
(21) Anmeldenummer: 97101087.1
(22) Anmeldetag: 24.01.1997
(51) Int. Cl.: B29C 47/88

(54) **Verfahren zum Herstellen von dickwandigen Rohren aus Polyethylen**
Method of manufacturing thickwalled pipes of polyethylene
Procédé de fabrication d'un tube à paroi épaisse en polyéthylène

(30) Priorität: 06.02.1996 DE 19604196
(43) Veröffentlichungstag der Anmeldung: 13.08.1997
(73) Patentinhaber: Basell Polyolefine GmbH, 77694 Kehl (DE)
(72) Erfinder: Schulte, Dl. Ulrich, 65779 Kelkheim (DE)

(56) Entgegenhaltungen:
- WO-A-94/05482
- WO-A-96/23644
- WO-A-96/34733
- DE-A- 3 216 720

## Beschreibung

Die vorliegende Erfindung betrifft ein verbessertes Verfahren zur Herstellung von großkalibrigen dickwandigen Rohren aus Polyethylen durch Extrusion aus einer Ringdüse und anschließendes Abkühlen der aus der Düse austretenden Schmelze mit Wasser als Kühlmittel von außen und zusätzlich auch von innen, bei dem zwei Schleppstopfen, deren Außendurchmesser dem Innendurchmesser des herzustellenden Kunststoffrohres entspricht, im Inneren des Rohres mit Halteelementen in ihrer räumlichen Position relativ zu der Extrusionsdüse an der Extrusionsdüse befestigt sind und bei dem es nach dem Austritt der Schmelze aus der Düse nicht zu den unerwünschten Verformungen durch schwerkraftbedingtes Fließen der Schmelze kommen kann.

Üblicherweise werden Rohre aus thermoplastischem Kunststoff nach der Extrusionstechnik hergestellt. Dabei wird das thermoplastische Material in einem Extruder plastifiziert, in schmelzflüssigem Zustand durch eine Düse ausgepresst und anschließend mit Hilfe von Wasser als Kühlmittel von außen abgekühlt. Dabei wird die Schmelze normalerweise in horizontaler Richtung ausgepresst. Bei besonders dickwandigen und großkalibrigen Rohren kommt es nachteiligerweise jedoch immer wieder vor, daß das Abkühlen der Schmelze nicht schnell genug gelingt, wodurch Teile der Kunststoffschmelze dem Gesetz der Schwerkraft gehorchend nach unten fließen und so zu beträchtlichen Wanddickenungleichmäßigkeiten führen, die die Ursache dafür sind, daß das fertige Rohr für seinen bestimmungsgemäßen Einsatzzweck nicht mehr brauchbar ist.

Die WO-A-96/34733 beschreibt bereits ein Verfahren zur Innenkühlung bei der Extrusion von Rohren durch Zirkulation von Wasser im Innenraum des Rohres. Der Fachmann erfährt aber nicht, welche optimale Wassermenge für das Verfahren zweckmäßig ist.

Aufgabe der Erfindung war es, ein verbessertes Extrusionsverfahren zu entwickeln, bei dem die Ausbildung von Wanddickenungleichmäßigkeiten wirksam unterbunden wird.

Gelöst wird diese Aufgabe durch ein Verfahren der eingangs genannten Gattung, dessen Kennzeichenmerkmal in Patentanspruch 1 angegeben ist und dessen bevorzugte Ausgestaltungen in den Unteransprüchen 2 bis 5 näher spezifiziert sind.

Die Attribute "großkalibrig" und "dickwandig" sollen im Rahmen der vorliegenden Erfindung so zu verstehen sein, daß Rohre mit einem Außendurchmesser im Bereich von 300 bis 1800 mm, insbesondere von 400 bis 1600 mm, und mit einer Wanddicke im Bereich von 25 bis 80 mm, vorzugsweise von 30 bis 60 mm, die Bedingungen dieser Merkmale erfüllen.

Um zu unterbinden, daß das Kühlwasser aus dem Innenraum des Rohres herausfließt, werden zweckmäßigerweise zwei Schleppstopfen eingesetzt. Als Schleppstopfen sollen im Rahmen der vorliegenden Erfindung scheibenförmige Dichtelemente verstanden werden, deren Außendurchmesser exakt dem Innendurchmesser des herzustellenden Kunststoffrohres entspricht. Die Schleppstopfen sind erfindungsgemäß mit Halteelementen in ihrer räumlichen Position relativ zu der Extrusionsdüse an der Extrusionsdüse befestigt.

In den Zwischenraum zwischen den beiden Schleppstopfen wird erfindungsgemäß Wasser in einer Menge eingefüllt, die das Volumen des Zwischenraumes zu 0,1 bis 40 %, vorzugsweise zu 0,2 bis 30 %, besonders bevorzugt zu 0,3 bis 25 %, mit Wasser füllt.

Der erste Schleppstopfen ist erfindungsgemäß in nur geringem Abstand vom Ort des Schmelzeaustritts angeordnet, wobei als geringer Abstand ein Abstand im Bereich von 20 bis 80 cm, vorzugsweise von 30 bis 70 cm verstanden werden soll. Der zweite Schleppstopfen ist erfindungsgemäß in größerem Abstand vom Ort des Schmelzeaustritts und nahe an dem Ablängwerkzeug, an dem das zunächst endlos aus der Düse austretende Rohr in einzelne Abschnitte aufgetrennt wird, angeordnet, wobei unter dem Begriff "nahe" ein Abstand im Bereich von 20 bis 50 cm, vorzugsweise von 25 bis 40 cm verstanden werden soll. Der zweite Schleppstopfen ist mit geeigneten Schnellverschlüssen versehen, mit deren Hilfe die Zu- und Ableitung des Kühlwassers bewerkstelligt werden kann. Zweckmäßigerweise sind mehrere Sätze von Wasserzu- und - ableitungen vorhanden, wobei jeweils nach dem Abtrennen eines Rohrabschnitts der gerade aktive Satz Zu- und Ableitungen gelöst und durch einen bereits bereitliegenden nächsten Satz Zu- und Ableitungen ersetzt wird.

Die erfindungsgemäße Innenkühlung macht sich insbesondere die Verdampfungswärme des Wassers zunutze. Die Schmelze tritt bei dem Extrusionsprozess mit einer Temperatur im Bereich von 170 bis 250 °C aus der Düse aus. Diese Temperatur muß möglichst schnell auf eine Temperatur von maximal 100 °C abgekühlt werden. Bei der Innenkühlung bildet sich eine natürliche Wasserströmung aus. Das durch den zweiten, düsenfernen Schleppstopfen eintretende Kühlwasser läuft im Inneren des Rohres in Richtung auf den ersten, düsennahen Schleppstopfen zu und verdampft infolge der hohen Temperatur der Kunststoffschmelze. Dabei wird der Schmelze die Verdampfungswärme entzogen und sie kühlt sich auf eine Temperatur von etwa 100 °C ab. Der entstandene Dampf strömt dann unter leichtem Überdruck wieder zurück in Richtung auf den zweiten, düsenfernen Schleppstopfen und kondensiert auf dem Weg dorthin wieder aus. Die abzuführende Wärmemenge hängt von dem Gesamtdurchsatz an Kunststoff ab und kann rechnerisch ermittelt werden. Demzufolge muß an dem zweiten, düsenfernen Schleppstopfen eine entsprechende Menge an aufgewärmtem Wasser entfernt und duch neues Kühlwasser ersetzt werden.

Vorzugsweise ist neben den Schnellverschlüssen, die bevorzugt als Bajonettverschlüsse ausgebildet sind, an dem zweiten, düsenfernen Schleppstopfen zusätzlich ein Überdrucksicherheitsventil eingebaut. Es hat sich gezeigt, daß sich durch das verdampfende Wasser im Inneren des Rohres ein leichter Überdruck einstellt, der zusätzlich einer Wandverformung entgegenwirkt.

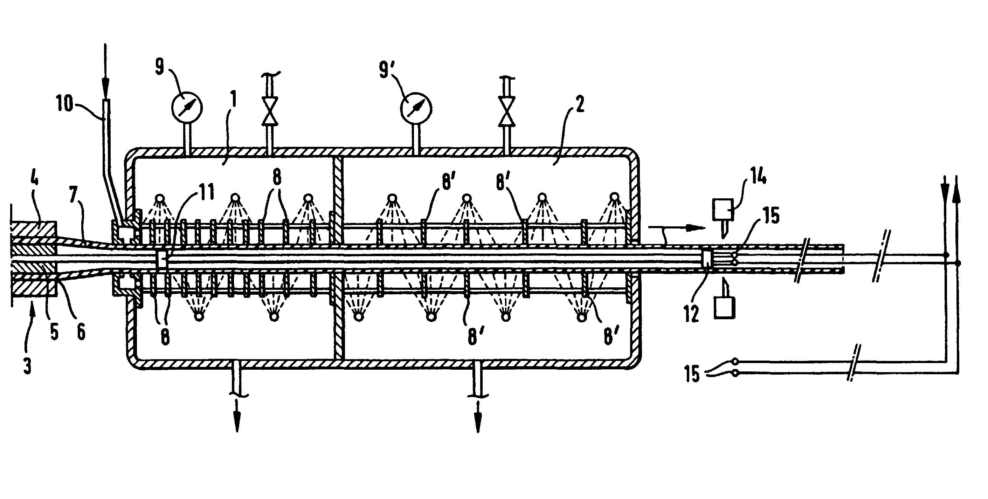

Die vorliegende Erfindung soll durch die beigefügte Zeichnung beispielhaft für den Fachmann noch näher erläutert werden.

Die Zeichnung zeigt schematisch einen senkrechten Schnitt durch ein Kühlsystem für Kunststoffrohre.

Mit Bezugszeichen sind insbesondere ein erster Vakuumbehälter 1 und ein zweiter Vakuumbehälter 2 verdeutlicht. Die Extrusionsdüse 3 umfasst in der Darstellung ein Mundstück 4, einen Dorn 5 und eine Klaibrierhülse 6. Die aus der Düse 3 austretende Schmelze 7 tritt in den ersten Vakuumbehälter 1 ein und wird sogleich über eine Wasserzuleitung 10 von außen mit Kühlwasser beaufschlagt. Im inneren des Vakuumbehälters 1, dessen Unterdruck an dem Manometer 9 angezeigt wird, befinden sich Kalibrierblenden 8, mit denen die Schmelze 7 von außen gestützt wird. Im Inneren der Schmelze 7 ist der erste Schleppstopfen 11 in Düsennähe angeordnet. Nach dem Durchlaufen des Vakuumbehälters 1 tritt die dann bereits zu dem fertigen Rohr verfestigte Schmelze 7 in den Vakuumbehälter 2 ein, dessen Unterdruck an dem Manometer 9' angezeigt wird und der ebenfalls Kalibrierblenden 8' zur Unterstützung des Rohres enthält, und wird dort weiter abgekühlt. Nach dem Austritt aus dem Vakuumbehälter 2 ist der zweite Schleppstopfen 12 in der Nähe der Ablängvorrichtung 14 angeordnet. Über die Bajonettverschlüsse 15 kann die erfindungsgemäße Kühlwasserzu- und -ableitung für den Innenraum des Rohres wirksam vorgenommen werden.

## Patentansprüche

1. Verfahren zur Herstellung von großkalibrigen, dickwandigen Rohren aus Polyethylen durch Extrusion aus einer Ringdüse und anschließendes Abkühlen der aus der Düse austretenden Schmelze mit Wasser als Kühlmittel von außen und zusätzlich auch von innen, bei dem zwei Schleppstopfen (11/12), deren Außendurchmesser dem Innendurchmesser des herzustellenden Kunststoffrohres entspricht, im Inneren des Rohres mit Halteelementen in ihrer räumlichen Position relativ zu der Extrusionsdüse (3) an der Extrusionsdüse (3) befestigt sind, wobei in den Zwischenraum zwischen den beiden Schleppstopfen (11/12) Wasser in einer Menge eingefüllt wird, die das Volumen des Zwischenraumes zu 0,1 bis 40 % mit Wasser füllt.

2. Verfahren nach Anspruch 1, **dadurch gekennzeichnet**, dass in den Zwischenraum zwischen den beiden Schleppstopfen (11/12) Wasser in einer Menge eingefüllt wird, die das Volumen des Zwischenraumes zu 0,3 bis 25 % füllt.

3. Verfahren nach einem der Ansprüche 1 oder 2, **dadurch gekennzeichnet**, daß der zweite Schleppstopfen (12) mit Schnellverschlüssen (15) zur Zu- und Ableitung des Kühlwassers ausgerüstet ist.

4. Verfahren nach einem der Ansprüche 1 bis 3, **dadurch gekennzeichnet**, daß mehrere Sätze von Wasserzu- und -ableitungen bereitgestellt werden, wobei jeweils nach dem Abtrennen eines Rohrabschnitts der gerade aktive Satz Zu- und Ableitungen gelöst und durch einen bereits bereitliegenden nächsten Satz Zu- und Ableitungen ersetzt wird.

5. Verfahren nach einem der Ansprüche 1 bis 4, **dadurch gekennzeichnet**, daß an dem zweiten Schleppstopfen (12) neben den Schnellverschlüssen (15), die bevorzugt als Bajonettverschlüsse ausgebildet sind, zusätzlich ein Überdrucksicherheitsventil eingebaut wird.

## Claims

1. A process for producing large-bore thick-walled pipes made of polyethylene by extrusion from an annular die and subsequent cooling of the melt emerging from the die, using water as the coolant from the outside and also additionally from the inside, in which process two floating plugs (11/12), whose external diameter corresponds to the internal diameter of the plastic pipe to be produced, are fixed in the inside of the pipe on the extrusion die (3) in their physical position relative to the extrusion die (3) by means of retaining elements, water being introduced into the space between the two floating plugs (11/12) in an amount which fills the volume of the space to a level of 0.1 to 40%.

2. The process as claimed in Claim 1, wherein water is introduced into the space between the two floating plugs (11/12) in an amount which fills the volume of the space to a level of 0.3 to 25%.

3. The process as claimed in either of claims 1 or 2, wherein the second floating plug (12) is equipped with quick closures (15), in order to supply and discharge the cooling water.

4. The process as claimed in one of claims 1 to 3, wherein a plurality of sets of water supply and discharge lines are provided, the currently active set of supply and discharge lines being detached and replaced by a subsequent set of supply and discharge lines, which is already prepared, in each case after a pipe section has been severed.

5. The process as claimed in one of claims 1 to 4, wherein, in addition to the quick closures (15), which are preferably designed as bayonet closures, an excess pressure safety valve is additionally installed on the second floating plug (12).

## Revendications

1. Procédé pour la fabrication de tubes de gros calibre, à paroi épaisse en polyéthylène par extrusion à travers une buse annulaire et ensuite refroidissement de la matière fondue sortant de la buse avec de l'eau comme agent réfrigérant de l'extérieur et en plus également de l'intérieur, dans lequel deux bouchons de circulation (11/12) dont le diamètre externe correspond au diamètre interne du tube de matière plastique à fabriquer, sont fixés à la buse d'extrusion (3) à l'intérieur du tube avec des éléments de fixation dans leur position spatiale par rapport à la buse d'extrusion (3), dans lequel dans l'espace intermédiaire entre les deux bouchons de circulation (11/12), est introduite de l'eau qui remplit le volume de l'espace intermédiaire à entre 0,1 et 40% avec de l'eau.

2. Procédé selon la revendication 1, **caractérisé en ce qu**'on introduit dans l'espace intermédiaire entre les deux bouchons de circulation (11/12) de l'eau en une quantité qui remplit le volume de l'espace intermédiaire à entre 0,3 et 25%.

3. Procédé selon l'une des revendications 1 ou 2, **caractérisé en ce que** le deuxième bouchon de circulation (12) est muni de fermetures rapides (15) pour l'alimentation et l'évacuation de l'eau de refroidissement.

4. Procédé selon l'une des revendications 1 à 3, **caractérisé en ce qu**'on prépare plusieurs jeux de canalisations d'alimentation et d'évacuation de l'eau, dans lequel respectivement après la séparation d'un tronçon de tube le jeu de canalisations d'alimentation et d'évacuation alors actives est enlevé et remplacé par un jeu suivant de canalisations d'alimentation et d'évacuation déjà préparé.

5. Procédé selon l'une des revendications 1 à 4, **caractérisé en ce que**, sur le deuxième bouchon de circulation (12) en plus des fermetures rapides (15), qui sont constituées de préférence de fermetures baïonnette, est incorporée en plus une soupape de sécurité de surpression.
